# EUROPÄISCHE PATENTANMELDUNG

(11) **EP 4 484 437 A1**
(43) Veröffentlichungstag der Anmeldung: **01.01.2025**
(21) Anmeldenummer: 23181668.7
(22) Anmeldetag: 27.06.2023
(51) Int. Cl.: C07F 9/6574

(54) **VERFAHREN ZUR HERSTELLUNG VON DIPHOSPHITEN**

(71) Anmelder: Evonik Oxeno GmbH & Co. KG, 45772 Marl (DE)
(72) Erfinder: SALE, Anna Chiara, 45657 Recklinghausen (DE); FRANKE, Robert, 45772 Marl (DE); FRIDAG, Dirk, 45721 Haltern am See (DE); KUCMIERCZYK, Peter, 44628 Herne (DE); MARKOVIC, Ana, 45721 Haltern am See (DE)
(74) Vertreter: Evonik Patent Association

(57) **Zusammenfassung**

Verfahren zur Herstellung von Diphosphiten und die zu Herstellung verwendeten Verbindungen.

## Beschreibung

Die Erfindung betrifft ein Verfahren zur Herstellung von Diphosphiten und die zu Herstellung verwendeten Verbindungen.

Die Herstellung von Diphosphiten erfolgt klassischer Weise unter Einsatz von Cl-haltigen Verbindungen oder über CI-haltige Zwischenstufen.

Wie in WO 2012/095255 A1 beschrieben verbleiben Chlorreste aus der Synthese im Diphosphit, welche beim Einsatz des Diphosphits zu Problemen führen, wie beispielsweise der Ausbildung von Chlorwasserstoff im Reaktor. Dies hat zur Folge, dass Diphosphite, welche unter Einsatz von Cl-haltigen Verbindungen herstellt wurden, im Anschluss an die Synthese aufwendig aufgereinigt werden müssen, um den Cl-Gehalt zu reduzieren. Doch selbst nach aufwendiger Aufreinigung verblieben noch immer CI-Reste im Diphosphit, welche beim weiteren Einsatz der Verbindung zu Problemen führen.

Die technische Aufgabe der Erfindung ist die Bereitstellung eines Verfahrens, bei dem die in Zusammenhang mit dem Stand der Technik auftretenden Probleme reduziert beziehungsweise beseitigt werden.

Die Aufgabe wird gelöst durch ein Verfahren gemäß Anspruch 1.

Verfahren umfassend die Verfahrensschritte:
a) 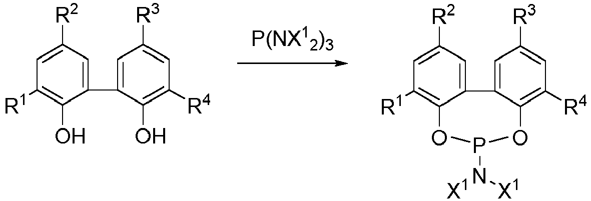 wobei R¹, R², R³, R⁴ ausgewählt sind aus: -H, -(C₁-C₁₂)-Alkyl, -O-(C₁-C₁₂)-Alkyl, -(C₆-C₁₀)-Aryl, -CN, -NO₂ und X¹ für -(C₁-C₆)-Alkyl steht;
b) 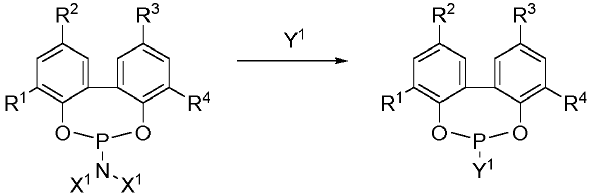 wobei Y¹ für einen Fünfring steht, bei dem mindestens ein C-Atom durch ein N-Atom ersetzt ist;
c) 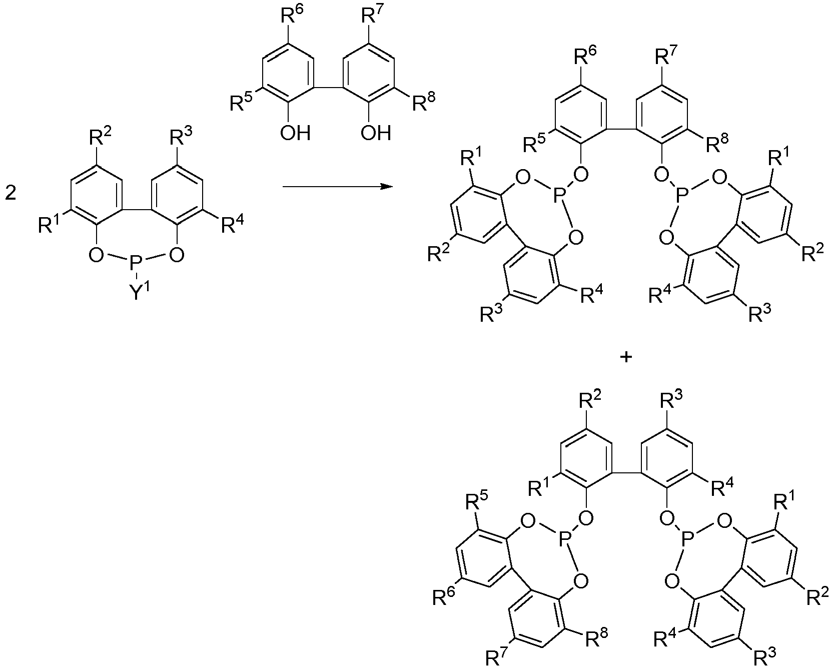 wobei R⁵, R⁶, R⁷, R⁸ ausgewählt sind aus: -H, -(C₁-C₁₂)-Alkyl, -O-(C₁-C₁₂)-Alkyl, -(C₆-C₁₀)-Aryl, -CN, -NO₂.

Beispiele für Fünfring bei dem ein C-Atom durch ein N-Atom ersetzt ist sind: Pyrrolidin, 2-Pyrrolin, 3-Pyrrolin, Azol.

Beispiele für Fünfring bei dem zwei C-Atom durch N-Atome ersetzt wurden sind: Diazolidin, 1,2-Diazol, 1,3-Diazol.

Beispiele für Fünfring bei dem drei C-Atom durch N-Atome ersetzt wurden sind: 1,2,3-Triazolidin, 1,2,4-Triazolidin, 1,2,3-Triazol, 1,2,4-Triazol.

Beispiele für Fünfring bei dem vier C-Atom durch N-Atome ersetzt wurden sind: Tetrazolidin, 5H-Terazol, 2,5-Dihydro-1H-tetrazol.

Beispiel für Fünfring bei dem fünf C-Atom durch N-Atome ersetzt wurden sind: 1H-Pentazol.

In einer Variant des Verfahrens weist der Fünfring (Y¹) mindestens eine Doppelbindung auf.

In einer Variant des Verfahrens weist der Fünfring (Y¹) zwei Doppelbindung auf.

In einer Variant des Verfahrens weist der Fünfring (Y¹) mindestens eine N-H-Bindung auf.

In einer Variant des Verfahrens weist der Fünfring (Y¹) mindestens zwei N-Atome auf.

In einer Variant des Verfahrens weist der Fünfring (Y¹) mindestens drei N-Atome auf.

In einer Variant des Verfahrens weist der Fünfring (Y¹) vier N-Atome auf.

In einer Variant des Verfahrens steht Y¹ für die folgende Verbindung:

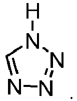

In einer Variant des Verfahrens steht X¹ für -(C₁-C₂)-Alkyl.

In einer Variant des Verfahrens steht X¹ für -CH₂-CH₃.

In einer Variant des Verfahrens steht X¹ für -CH₃.

In einer Variant des Verfahrens sind R¹, R², R³, R⁴ ausgewählt aus: -H, -(C₁-C₁₂)-Alkyl, -O-(C₁-C₁₂)-Alkyl, -(C₆-C₁₀)-Aryl.

In einer Variant des Verfahrens sind R¹, R², R³, R⁴ ausgewählt aus: -(C₁-C₁₂)-Alkyl, -O-(C₁-C₁₂)-Alkyl.

In einer Variant des Verfahrens sind R¹, R², R³, R⁴ ausgewählt aus: -CH₃, -O-CH₃, -t*^{ert}*Bu.

In einer Variant des Verfahrens sind R⁵, R⁶, R⁷, R⁸ ausgewählt aus: -H, -(C₁-C₁₂)-Alkyl, -O-(C₁-C₁₂)-Alkyl, -(C₆-C₁₀)-Aryl.

In einer Variant des Verfahrens sind R⁵, R⁶, R⁷, R⁸ ausgewählt aus: -(C₁-C₁₂)-Alkyl, -O-(C₁-C₁₂)-Alkyl.

In einer Variant des Verfahrens sind R⁵, R⁶, R⁷, R⁸ ausgewählt aus: -CH₃, -O-CH₃, -t*^{ert}*Bu.

In einer Variant des Verfahrens umfasst dieses den zusätzlichen Verfahrensschritt d):
d) Zugabe eines Lösungsmittels.

In einer Variant des Verfahrens ist das Lösungsmittel ausgewählt aus: Acetonitril (ACN), Toluol, Xylol, THF, Heptan.

In einer Variant des Verfahrens ist das Lösungsmittel Acetonitril (ACN).

In einer Variant des Verfahrens erfolgt die Synthese in Abwesenheit von Cl.

Neben dem Verfahren an sich werden auch Verbindungen beansprucht, welche in dem Verfahren zum Einsatz kommen.

Verbindung gemäß der Formel (**I**): 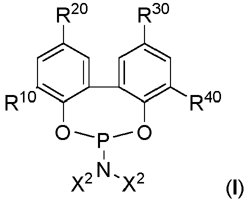 wobei R¹⁰, R²⁰, R³⁰, R⁴⁰ ausgewählt sind aus: -(C₁-C₁₂)-Alkyl, -O-(C₁-C₁₂)-Alkyl, -(C₆-C₁₀)-Aryl, -CN, -NO₂ und X² für -(C₁-C₆)-Alkyl steht.

In einer Ausführungsform sind R¹⁰, R²⁰, R³⁰, R⁴⁰ ausgewählt aus: -(C₁-C₁₂)-Alkyl, -O-(C₁-C₁₂)-Alkyl.

In einer Ausführungsform sind R¹⁰, R²⁰, R³⁰, R⁴⁰ ausgewählt aus: -CH₃, -O-CH₃, -t*^{ert}*Bu.

In einer Ausführungsform steht X² für -(C₁-C₂)-Alkyl.

In einer Ausführungsform steht X² für -CH₂-CH₃.

In einer Ausführungsform steht X² für -CH₃.

Verbindung gemäß der Formel (**II**): 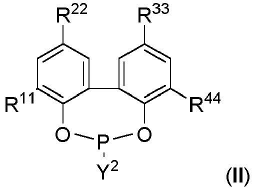 wobei R¹¹, R²², R³³, R⁴⁴ ausgewählt sind aus: -H, -(C₁-C₁₂)-Alkyl, -O-(C₁-C₁₂)-Alkyl, -(C₆-C₁₀)-Aryl, - CN, -NO₂ und Y² für einen Fünfring steht, bei dem mindestens ein C-Atom durch ein N-Atom ersetzt ist.

In einer Ausführungsform sind R¹¹, R²², R³³, R⁴⁴ ausgewählt aus: -H, -(C₁-C₁₂)-Alkyl, -O-(C₁-C₁₂)-Alkyl, -(C₆-C₁₀)-Aryl.

In einer Ausführungsform sind R¹¹, R²², R³³, R⁴⁴ ausgewählt aus: -(C₁-C₁₂)-Alkyl, -O-(C₁-C₁₂)-Alkyl.

In einer Ausführungsform sind R¹¹, R²², R³³, R⁴⁴ ausgewählt aus: -CH₃, -O-CH₃, -t*^{ert}*Bu.

In einer Ausführungsform weist der Fünfring (Y²) mindestens eine Doppelbindung auf.

In einer Ausführungsform weist der Fünfring (Y²) zwei Doppelbindung auf.

In einer Ausführungsform weist der Fünfring (Y²) mindestens eine N-H-Bindung auf.

In einer Ausführungsform weist der Fünfring (Y²) mindestens zwei N-Atome auf.

In einer Ausführungsform weist der Fünfring (Y²) mindestens drei N-Atome auf.

In einer Ausführungsform weist der Fünfring (Y²) vier N-Atome auf.

Ausführungsform steht Y² für den folgenden Rest:

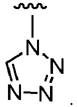

Im Folgenden soll die Erfindung anhand von Ausführungsbeispielen näher erläutert werden.

### Synthesen

### A) erste Stufe mit -CH₂-CH₃

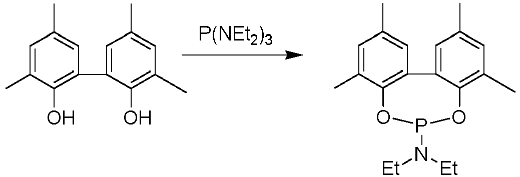

In einem 1000 ml Schlenk wurden 24.3 g (0,099 mol) 3.3.5.5-Tetramethyl-1,1-biphenol abgewogen und über 15 h mittels Ölpumpenvakuums getrocknet. Am nächsten Morgen wurde der Schlenk mit Argon geflutet und das Biphenol in 400 ml getrocknetem Acetonitril und 25 g (0.096 mol 27.8 ml) Hexaethylphosphoroustriamid (Tris-(diethylamido)-phosphin) gelöst. Anschließend wurde die Lösung auf 65 °C erwärmt. Nach 4,5 Stunden wurde die Reaktion vollständig umgesetzt. Die Reaktionslösung wurde über 15 h auf Raumtemperatur abgekühlt. Die Reaktionslösung wurde mittels Ölpumpenvakuums bei 40 °C bis zur Trockenen eingeengt. Reinheit von dem Zielprodukt: 95%.

³¹P NMR Ergebnisse 145,7 ppm.

### B) erste Stufe mit -CH₃

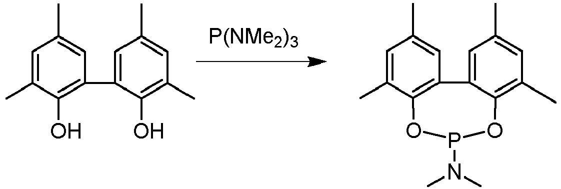

In einem 250 ml Schlenk wurden 4.38 g (0,018 mol) 3.3.5.5-Tetramethyl-1,1-biphenol abgewogen und über 15 h mittels Ölpumpenvakuums getrocknet. Am nächsten Morgen wurde der Schlenk mit Argon geflutet und das Biphenol in 35 ml getrocknetem Acetonitril und 3.12 g (0.018 mol 3.5 ml) Hexamethylphosphoroustriamid (Tris-(dimethylamido)-phosphin) gelöst. Während der Reaktion wurde ein leichter Argonstrom übergeleitet, um das entstandene Dimethylamin abzuleiten. Die Reaktion wurde bei Raumtemperatur rühren gelassen. Nach 5 Stunden wurde die Reaktion vollständig umgesetzt. Die Reaktionslösung wurde über 15 h auf Raumtemperatur gelassen. Die Reaktionslösung wurde mittels Ölpumpenvakuums bei 40 °C bis zur Trockenen eingeengt. Reinheit von dem Zielprodukt: 96%.

³¹P NMR Ergebnisse 145,2 ppm.

### C) Umsetzung zum Diphosphit

### Beispiel 1:

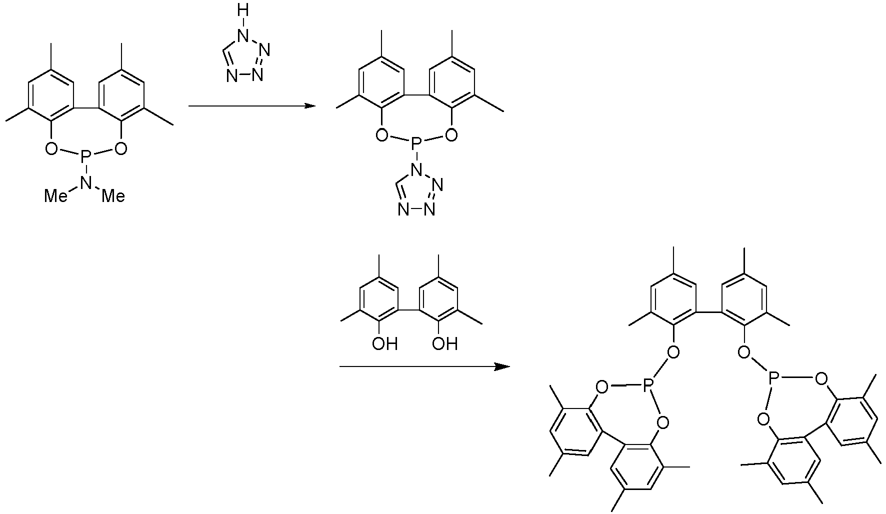

In der Glovebox wurde in einem 250 ml 5.7 g (0.018 mol) der Ausgangsverbindung abgewogen, ausgeschleust und mittels einer Argon gespülter Spritze 52 ml (1.64 g 0.0234 mol) 0.45M Tetrazol-ACN-Lösung zugegeben. Dabei entstand eine Suspension. Anschließend wurde die Reaktionslösung unter einem leichten Argon überström auf 60 °C erwärmt. Nach 2 Stunden wurde die Reaktionslösung auf Raumtemperatur abgekühlt und über 15 h mit einem leichten Argonstrom weiter reagieren gelassen. Anschließend wurde noch mal 20 ml getrocknetes ACN hinzugegeben.

NMR Ergebnisse: ³¹P NMR 135. 8 ppm.

In einem 50 ml Schlenk wurde 2.4 g (0.010 mol) 2,2'-Bis-(3,5-dimethylphenol) eingewogen, über 15 h getrocknet und anschließend mit Argon geflutet. Anschließend wurde das Biphenol bei Raumtemperatur portionsweise im Argongegenstrom zur 0.022 molaren (7.4 g) ACN-Tetrazol-Ligand Reaktionslösung gegeben und über 15 h bei 60 °C rühren gelassen. Am nächsten Morgen wurde die Reaktionslösung auf 0 °C abgekühlt, abgefrittet, zweimal mit 10 ml getrocknetem kalten ACN nachgewaschen und die Fritte getrocknet. Reinheit von Zielprodukt: 93%.

³¹P NMR 142.9 ppm.

### Beispiel 2:

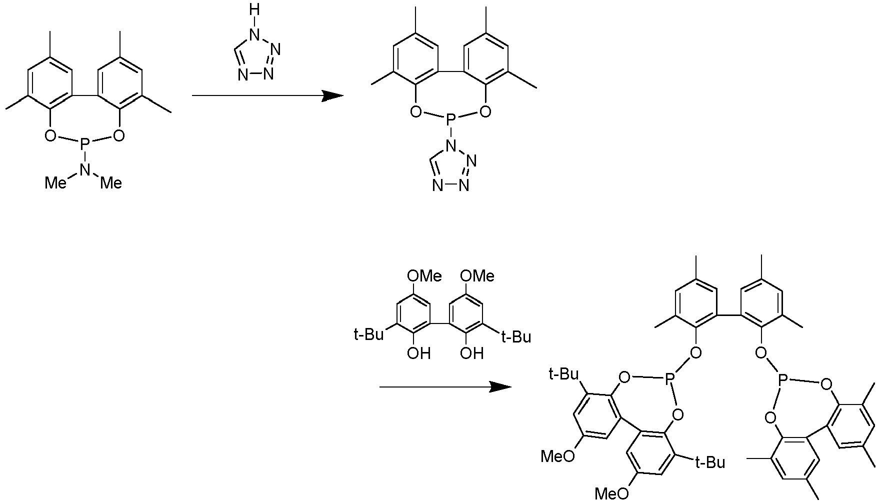

In der Glovebox wurde in einem 250 ml 5.7 g (0.018mol) der Ausgangsverbindung abgewogen, ausgeschleust und mittels einer Argon gespülter Spritze 52 ml (1.64 g 0.0234 mol) 0.45M Tetrazol-ACN-Lösung zugegeben. Dabei entstand eine Suspension. Anschließend wurde die Reaktionslösung unter einem leichten Argon überström auf 60 °C erwärmt. Nach einer Stunde wurden 3.46 g (0.010 mol) 5,5'-dimethoxy-3,3'-di-tert-butyl-2,2'-biphenol eingewogen, ausgeschleust und es wurde bei 0 °C portionsweise im Argongegenstrom zur aktuellen (0.018 mol) ACN-Tetrazol-Ligand Reaktionslösung geschüttet. Im Anschluss daran die Reaktionslösung langsam auf Raumtemperatur kommen gelassen und über 15 h reagieren gelassen. Anschließend wurde der Feststoff abgefrittet, zweimal mit 10 ml getrocknetem ACN nachgewaschen und getrocknet. Reinheit an Zielprodukt: 83%.

³¹P NMR 142.0, 141.1 ppm.

Durch die neue Syntheseroute ist es möglich auf CI-haltige Verbindungen zu verzichten. Dies erspart zum einen die aufwendige Aufreinigung des Diphosphits nach der Synthese, zum anderen wird auch der Eintrag von Rest-Cl in den Reaktor vermieden.

## Patentansprüche

1. Verfahren umfassend die Verfahrensschritte:
a) 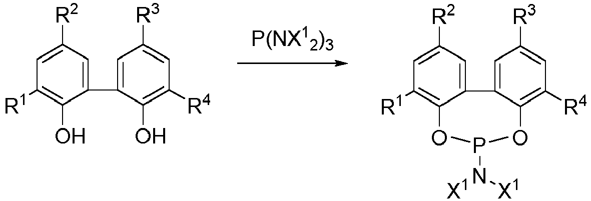 wobei R¹, R², R³, R⁴ ausgewählt sind aus: -H, -(C₁-C₁₂)-Alkyl, -O-(C₁-C₁₂)-Alkyl, -(C₆-C₁₀)-Aryl, -CN, -NO₂ und X¹ für -(C₁-C₆)-Alkyl steht;
b) 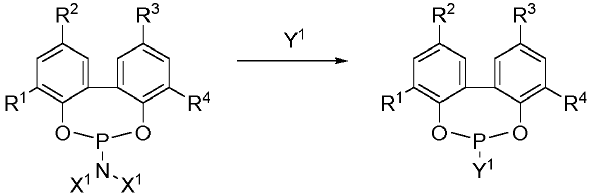 wobei Y¹ für einen Fünfring steht, bei dem mindestens ein C-Atom durch ein N-Atom ersetzt ist;
c) 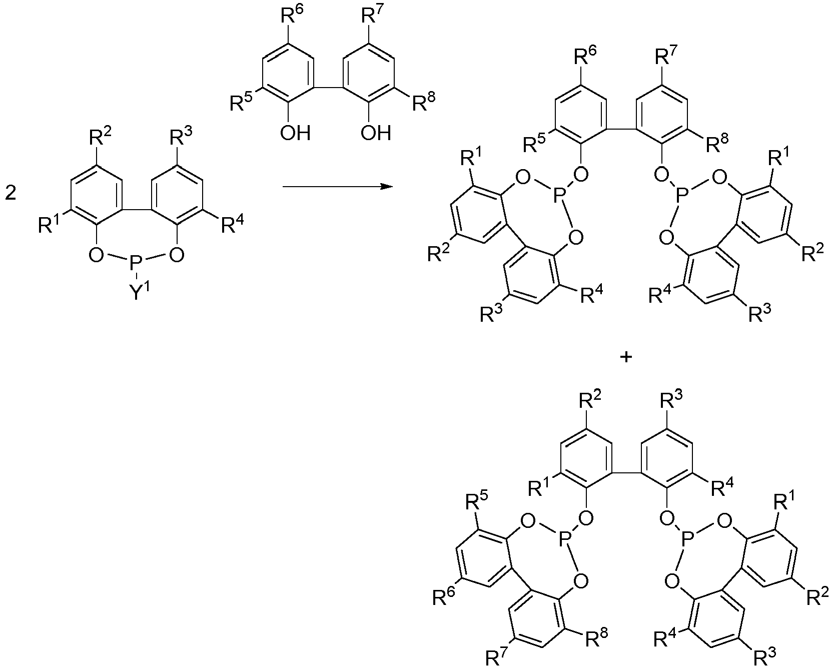 wobei R⁵, R⁶, R⁷, R⁸ ausgewählt sind aus -H, -(C₁-C₁₂)-Alkyl, -O-(C₁-C₁₂)-Alkyl, -(C₆-C₁₀)-Aryl, -CN, -NO₂.

2. Verfahren nach Anspruch 1,
wobei der Fünfring mindestens eine Doppelbindung aufweist.

3. Verfahren nach einem der Ansprüche 1 oder 2,
wobei der Fünfring mindestens eine N-H-Bindung aufweist.

4. Verfahren nach einem der Ansprüche 1 bis 3,
wobei Y¹ für die folgende Verbindung steht:

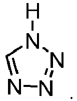

5. Verfahren nach einem der Ansprüche 1 bis 4,
wobei X¹ für -(C₁-C₂)-Alkyl steht.

6. Verfahren nach einem der Ansprüche 1 bis 5,
wobei R¹, R², R³, R⁴ ausgewählt sind aus: -H, -(C₁-C₁₂)-Alkyl, -O-(C₁-C₁₂)-Alkyl, -(C₆-C₁₀)-Aryl.

7. Verfahren nach einem der Ansprüche 1 bis 6,
wobei R¹, R², R³, R⁴ ausgewählt sind aus: -(C₁-C₁₂)-Alkyl, -O-(C₁-C₁₂)-Alkyl.

8. Verfahren nach einem der Ansprüche 1 bis 7,
wobei R⁵, R⁶, R⁷, R⁸ ausgewählt sind aus: -H, -(C₁-C₁₂)-Alkyl, -O-(C₁-C₁₂)-Alkyl, -(C₆-C₁₀)-Aryl.

9. Verfahren nach einem der Ansprüche 1 bis 8,
wobei R⁵, R⁶, R⁷, R⁸ ausgewählt sind aus: -(C₁-C₁₂)-Alkyl, -O-(C₁-C₁₂)-Alkyl.

10. Verfahren nach einem der Ansprüche 1 bis 9,
umfassen den zusätzlichen Verfahrensschritt d): d) Zugabe eines Lösungsmittels.

11. Verfahren nach Anspruch 10,
wobei das Lösungsmittel ausgewählt ist aus: Acetonitril (ACN), Toluol, Xylol, THF, Heptan.

12. Verbindung gemäß der Formel (I): 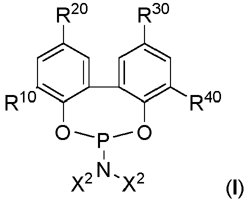 wobei R¹⁰, R²⁰, R³⁰, R⁴⁰ ausgewählt sind aus: -(C₁-C₁₂)-Alkyl, -O-(C₁-C₁₂)-Alkyl, -(C₆-C₁₀)-Aryl, -CN, -NO₂ und X² für -(C₁-C₆)-Alkyl steht.

13. Verbindung nach Anspruch 12,
wobei R¹⁰, R²⁰, R³⁰, R⁴⁰ ausgewählt sind aus: -(C₁-C₁₂)-Alkyl, -O-(C₁-C₁₂)-Alkyl.

14. Verbindung gemäß der Formel (II): 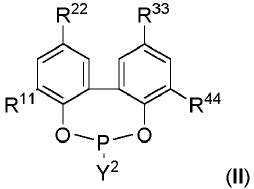 wobei R¹¹, R²², R³³, R⁴⁴ ausgewählt sind aus: -H, -(C₁-C₁₂)-Alkyl, -O-(C₁-C₁₂)-Alkyl, -(C₆-C₁₀)-Aryl, - CN, -NO₂ und Y² für einen Fünfring steht, bei dem mindestens ein C-Atom durch ein N-Atom ersetzt ist.

15. Verbindung nach Anspruch 14,
wobei Y² für den folgenden Rest steht:
